# EUROPÄISCHE PATENTANMELDUNG

(11) **EP 1 418 204 A2**
(43) Veröffentlichungstag der Anmeldung: **12.05.2004**
(21) Anmeldenummer: 03023358.9
(22) Anmeldetag: 16.10.2003
(51) Int. Cl.: C08K 9/04, B41M 5/26

(54) **Lasermarkierbare Pigmente**

(30) Priorität: 06.11.2002 DE 10252007
(71) Anmelder: MERCK PATENT GmbH, 64293 Darmstadt (DE)
(72) Erfinder: Kniess, Helge, 64331 Weiterstadt (DE); Pfaff, Gerhard, Dr., 64839 Münster (DE); Kuntz, Matthias, Dr., 64342 Seeheim-Jugenheim (DE); Brehm, Hans-Jürgen, 64678 Lindenfels (DE); Delp, Reiner, 64293 Darmstadt (DE)

(57) **Zusammenfassung**

Die vorliegende Erfindung betrifft lasermarkierbare Pigmente, die sich dadurch auszeichnen, dass ein Absorber mit einem Markierer sowie optional mit einer Diffusionssperre beschichtet ist, Verfahren zur Herstellung der lasermarkierbaren Pigmente sowie ihre Verwendung.

## Beschreibung

Die vorliegende Erfindung betrifft lasermarkierbare Pigmente, die sich dadurch auszeichnen, dass ein Absorber mit einem Markierer sowie optional mit einer Diffusionssperre beschichtet ist.

Der Einsatz von Laserstrahlung zur Markierung von Kunststoffen gewinnt zunehmend an Bedeutung. Dies hängt mit einer Reihe von Gründen zusammen. Mit dieser Technik lassen sich große Datenmengen komprimiert z.B. in Form von Bar-Codes auf Produktionsgüter aufbringen. Die dort gespeicherte Information kann jederzeit unter Einsatz von Laserscannern wieder abgerufen werden, um so eine genaue Kontrolle von Produktions- und Vertriebsabläufen zu gewährleisten. Dabei ist auch eine Kennzeichnung nicht planarer Oberflächen möglich, die mit den herkömmlichen Etikettiermethoden kaum realisierbar ist. Zusätzlich erweisen sich die Lasermarkierungen als fälschungssicher, da diese im Kunststoffkörper selbst und daher dauerhaft und abriebfest sind.

Viele Kunststoffe lassen sich nur schwierig oder überhaupt nicht mit dem Laser markieren. Hierzu zählen viele gebräuchliche Kunststoffe wie z.B. Polyethylen (PE), Polypropylen (PP), Polyamid (PA), Polymethylmethacrylat (PMMA), Polyoxymethylen (POM), Polyurethan (PU) oder Polyester. So bewirkt bei Polyolefinen die Laserbestrahlung selbst bei sehr hoher Leistung nur eine schwache, kaum lesbare Markierung, da der Absorptionskoeffizient der zu verarbeitenden Kunststoffe bei diesen Wellenlängen nicht hoch genug ist, um einen Farbumschlag im polymeren Material zu induzieren. Der Kunststoff darf das Laserlicht nicht völlig reflektieren oder transmittieren, da es dann zu keiner Wechselwirkung kommt. Auf der anderen Seite darf die Absorption auch nicht zu stark sein, da in diesem Falle Kunststoff verdampft und eine Gravur erzeugt wird. Vielfach ist es notwendig, entsprechende Zusatzstoffe wie z.B. Absorber zuzugeben, um eine Laserbeschriftung zu erzielen.

Es gibt aber auch Polymere, die intrinsisch lasermarkierbar sind und dunkle Lasermarkierungen ergeben. Hierzu zählen z.B. PET, Acrylnitril-Butadien-Styrol (ABS), Polystyrol (PS), Polyphenylether (PPO), Liquid Crystal Polymers (LCP), Polyphenylensulfid (PPS), Polyarylate, Polyarylsulfide, Polyarylsulfone oder Polyaryletherketone.

Aus der EP 0 959 101 sind lasermarkierbare Pigmente bekannt, die aus Mineralpigmenten mit einer Beschichtung aus Chitin bestehen, wobei im Zuge der Lasermarkierung die Chitinschicht durch die energiereiche Strahlung zersetzt wird.

In den oben beschriebenen Fällen wird jeweils das zu markierende Polymer bestrahlt, das die Laserenergie aufnimmt, gegebenenfalls auch durch Zusatz eines Pigmentes als weiteren Absorber. Bei Einarbeitung in nichtmarkierende Kunststoffe erhitzen sich diese jedoch in direkter Umgebung des Bestrahlungsortes ebenfalls und zersetzen sich unter oberflächlicher Zerstörung des Kunststoffs. Durch die beschädigte Kunststoffoberfläche hat Luftsauerstoff Zutritt, wodurch eine weitere Zersetzung des Polymers induziert wird. Dies erweist sich als Nachteil, da die aufgebrochene Kunststoffschicht über der Markierung das Licht streut und den Kontrast der Markierung somit verringert. Darüber hinaus ist man an glatten Kunststoffoberflächen interessiert.

Die Aufgabe der vorliegenden Erfindung ist es daher, lasermarkierbare Pigmente bereit zu stellen, die eine kontrastreiche und gute Lasermarkierung bei gleichzeitiger Beibehaltung der glatten Oberfläche des Polymers liefern und universell in die zu markierenden Materialien eingearbeitet werden können.

Überraschenderweise wurde gefunden, dass die erfindungsgemäßen lasermarkierbaren Pigmente das eingangs geschilderte komplexe Anforderungsprofil vollständig erfüllen.

Gegenstand der Erfindung sind daher lasermarkierbare Pigmente, wobei diese aus einem Absorber bestehen, der mit einem Markierer beschichtet ist. Der direkte Kontakt von Absorber und markierendem Material führt zu einer lokalisierten und kontrastreichen Markierung. In einer bevorzugten Ausführungsform enthält das erfindungsgemäße lasermarkierbare Pigment eine Diffusionssperre als zusätzliche Schicht. Die Diffusionssperre verhindert, dass der Markierer durch Luftzufuhr zersetzt wird und Beschädigungen am Polymer auftreten. Durch Einsatz der erfindungsgemäßen lasermarkierbaren Pigmente lassen sich auch sonst nur schwer markierbare Polymere mit dem Laser markieren. Durch den direkten Kontakt von Absorber und Markierer werden bei Bestrahlung kontrastreiche Markierungen erzielt. Darüber hinaus zeichnen sich die unter Verwendung der erfindungsgemäßen Pigmente hergestellten Markierungen durch eine glatte Oberfläche aus, die die Effizienz dieser Pigmente belegen.

Als Absorber eignen sich lasersensitive Materialien wie z.B. Füllstoffe, anorganische Pigmente einschließlich leitfähiger Pigmente und/oder Effektpigmente sowie intrinsisch markierende Polymere. Besonders geeignete lasersensitive Materialien sind Füllstoffe wie z.B. TiO₂ und SiO₂ oder Schichtsilikate. Als Schichtsilikate kommen dabei insbesondere farbneutrale natürliche Muskovit-Glimmer in Betracht. Selbstverständlich können auch andere natürliche Glimmer wie Phlogopit und Biotit, synthetischer Glimmer, Talk- und Glasschuppen verwendet werden. Unter Effektpigmenten sind alle bekannten Glanzpigmente (Metall- und Perlglanzpigmente) zu verstehen, wie sie z.B. von den Firmen Engelhard Corp., Eckart-Werke und Merck KGaA vertrieben werden. Beispiele und Ausführungsformen der oben genannten Pigmente und Pigmentaufbauten finden sich z.B. auch in den Research Disclosures RD 471001 und RD472005, deren Offenbarungen hiermit unter Bezugnahme mit eingeschlossen sind.

Geeignete leitfähige Pigmente sind z.B. die unter dem Handelsnamen Minatec® vertriebenen Pigmente der Fa. Merck KGaA. Hierbei handelt es sich um plättchenförmige Glimmerpigmente, die als leitfähige Schicht eine äußere Schicht aus Zinn-/Antimonoxid enthalten. Als geeignete lasersensitive Pigmente sind hier weiterhin die Oxide, Hydroxide, Sulfide, Sulfate und Phosphate von Metallen, wie z.B. Kupfer, Bismuth, Zinn, Zink, Silber, Antimon, Mangan, Eisen, Nickel, Chrom zu nennen. Auch intrinsisch markierende Polymere wie z.B. Polystyrol, Polyvinylcarbonat oder Polyphenylensulfid eignen sich in ihrer Doppelfunktion als Markierer und Absorber.

Als Markierer können in den erfindungsgemäßen lasermarkierbaren Pigmenten intrinsisch lasermarkierbare Polymere wie z.B. PET, ABS, PS, PPO, PPS, PEI oder LCPs, vorzugsweise PS und PPS eingesetzt werden. Als Markierer können aber auch nicht lasersensitive Polymere verwendet werden. Dazu eignen sich leicht verkokende Polymere, wie z.B. PE und PP.
Der Anteil an Markierer in den erfindungsgemäßen lasermarkierbaren Pigmenten beträgt 1-90 Gew.-%, vorzugsweise 5-80 Gew.-% und im Besonderen 10-60 Gew.-%, bezogen auf das lasermarkierbare Pigment.

Als Diffusionssperre eignen sich Flammschutzmittel, wie z.B. Ammoniumphosphat, Aluminiumoxidhydrate, Borate, Antimonoxid, halogenierte organische Verbindungen, Wasserglas oder Ammoniumpolyphosphat. Bevorzugt eingesetzt werden Wasserglas und Aluminiumoxidhydrate.

Der Anteil der Diffusionsperre beträgt 0-50 Gew.-%, vorzugsweise 1-20 Gew.-% und im Besonderen 2-10 Gew.-%, bezogen auf das lasermarkierbare Pigment.

Zur Herstellung der erfindungsgemäßen lasermarkierbaren Pigmente wird der entsprechende Absorber mit dem Markierer beschichtet. Gegenstand der Erfindung ist daher auch ein Verfahren zur Herstellung der lasermarkierbaren Pigmente, wobei der Absorber mit einem Markierer beschichtet wird. In einer weiteren Ausführungsform des erfindungsgemäßen Verfahrens wird das lasermarkierbare Pigment zusätzlich mit einer Diffusionssperre beschichtet.
Die Beschichtung des Absorbers mit dem Markierer kann auf unterschiedliche Weise erfolgen. So kann die Beschichtung über eine Polymerisation geeigneter Monomere des Markierers auf der Absorberoberfläche erzielt werden. Diese Polymerisation kann in allen dem Fachmann bekannten Medien, wie z.B. organischen Lösungsmitteln erfolgen. Hierzu wird der Absorber in dem Medium suspendiert und die Polymerisation durchgeführt. Die Abtrennung des lasermarkierbaren Pigmentes kann nach allen dem Fachmann bekannten Methoden, wie z.B. Trocknung, Destillation oder Sprühtrocknung erfolgen. Die Parameter des erfindungsgemäßen Verfahrens können in fachmännischer Weise optimiert werden.

Weiterhin kann die Beschichtung des Absorbers mit dem Markierer durch Suspendierung des Absorbers in Polymerlösungen erreicht werden. Hierzu wird das Polymer in einem geeigneten Lösungsmittel aufgelöst und mit dem Absorber versetzt. Durch Entfernen des Lösungsmittels wird das ausfallende Polymer auf der Absorberoberfläche fixiert. Dies kann erreicht werden durch vollständiges Abdestillieren des Lösungsmittels, Zugabe eines zweiten Lösungsmittels, in dem das Polymer schlechter löslich ist als in dem ursprünglichen oder durch Sprühtrocknung der Suspension. Die Optimierung der Prozessparameter kann durch den Fachmann auf einfache Weise erfolgen.

Weiterhin kann die Beschichtung auch durch Mischung des Absorbers mit einer Polymerschmelze erzielt werden. Eine hergestellte Polymerschmelze wird mit dem Pigment vermischt und während des Mischprozesses abgekühlt. Alternativ kann das Pigment in der Polymerschmelze suspendiert und versprüht werden. Die optimalen Bedingungen können in fachmännischer Weise gewählt werden.

Die Beschichtung der erfindungsgemäßen lasermarkierbaren Pigmente mit einer Diffusionssperre kann auf alle dem Fachmann bekannten Arten und Weisen erfolgen. Bevorzugt werden nasschemische Verfahren eingesetzt.

Für die Lasermarkierung unter Verwendung der erfindungsgemäßen lasermarkierbaren Pigmente können alle bekannten thermoplastischen Kunststoffe, wie sie z.B. im Ullmann, Bd. 15, S. 457 ff., Verlag VCH beschrieben werden, verwendet werden. Geeignete Kunststoffe sind z.B. Polyethylen, Polypropylen, Polyamide, Polyester, Polyesterester, Polyetherester, Polyphenylenether, Polyacetal, Polybutylenterephthalat, Polymethylacrylat, Polyvinylacetat, Polystyrol, Acrylnitril-Butadien-Styrol, Acrylnitril-Styrol-Acrylester, Polycarbonat, Polyethersulfone, Polyetherketone sowie deren Copolymere und/oder Mischungen.

Die Einarbeitung der erfindungsgemäßen lasermarkierbaren Pigmente in den thermoplastischen Kunststoff erfolgt, indem das Kunststoffgranulat mit dem lasermarkierbaren Pigment gemischt und dann unter Wärmeeinwirkung verformt wird. Dem Kunststoffgranulat können bei der Einarbeitung der lasermarkierbaren Pigmente dem Fachmann bekannte Haftmittel, organische polymerverträgliche Lösemittel, Stabilisatoren und/oder unter den Arbeitsbedingungen temperaturstabile Tenside zugesetzt werden. Die Herstellung der pigmentierten Kunststoffgranulate erfolgt in der Regel so, dass in einem geeigneten Mischer das Kunststoffgranulat vorgelegt, mit eventuellen Zusätzen benetzt und danach das lasermarkierbare Pigment zugesetzt und untergemischt wird. Die so erhaltene Mischung kann dann direkt in einem Extruder oder einer Spritzgussmaschine verarbeitet werden. Anschließend findet die Markierung mit geeigneter Strahlung statt.

Vorzugsweise wird bei der Markierung energiereiche Strahlung eingesetzt, im allgemeinen im Wellenlängenbereich von 157 bis 10600 nm, insbesondere im Bereich von 300 bis 10600 nm. Beispielsweise seien hier CO₂-Laser (10600 nm), Nd:YAG-Laser (1064 bzw. 532 nm) oder gepulste UV-Laser (Excimer-Laser) erwähnt. Besonders bevorzugt werden Nd:YAG-Laser und CO₂-Laser eingesetzt. Die Energiedichten der eingesetzten Laser liegen im allgemeinen im Bereich von 0.3 mJ/cm² bis 50 mJ/cm², vorzugsweise im Bereich von 0.3 mJ/cm² bis 10 mJ/cm².

Die Beschriftung mit dem Laser erfolgt derart, dass der Probenkörper in den Strahlengang eines gepulsten Lasers, vorzugsweise eines Nd:YAG-Lasers gebracht wird. Ferner ist eine Beschriftung mit einem CO₂- oder einem Excimer-Laser möglich. Jedoch sind auch mit anderen Lasertypen, die eine Wellenlänge in einem Bereich hoher Absorption des Absorbers aufweisen, die gewünschten Ergebnisse zu erzielen. Der erhaltene Farbton und die Farbtiefe werden durch die Laserparameter wie die Bestrahlungszeit und Bestrahlungsleistung bestimmt. Die Leistung der verwendeten Laser hängt von der jeweiligen Anwendung ab und kann im Einzelfall vom Fachmann ohne weiteres ermittelt werden.

Die Verwendung der erfindungsgemäßen lasermarkierbaren Pigmente kann in allen dem Fachmann bekannten Kunststoffen erfolgen. Die auf diese Weise pigmentierten Kunststoffe können als Formkörper in der Elektro-, Elektronik- und Kraftfahrzeugindustrie Anwendung finden. Ein weiteres wichtiges Anwendungsgebiet für die Laserbeschriftung sind Ausweiskarten und Kunststoffmarken zur individuellen Kennzeichnung von Tieren. Der Anteil an lasermarkierbaren Pigmenten im Kunststoff beträgt bei den Anwendungen 0.5 bis 10 Gew.-%, vorzugsweise 1 bis 5 Gew.-% und insbesondere 1.5 bis 3 Gew.-%. Die Kennzeichnung und Beschriftung von Gehäusen, Leitungen, Tastenkappen, Zierleisten bzw. Funktionsteilen im Heizungs-, Lüftungs- und Kühlbereich oder Schalter, Stecker, Hebel und Griffe, die aus den mit den erfindungsgemäßen Pigmenten pigmentierten Kunststoffen bestehen, kann selbst an schwer zugänglichen Stellen mit Hilfe von Laserlicht erfolgen. Die Markierungen zeichnen sich dadurch aus, dass sie wisch- und kratzfest, stabil bei nachträglichen Sterilisationsprozessen und hygienisch rein beim Markierungsprozeß aufbringbar sind. Durch den besonderen Aufbau der Pigmente wird eine Beschädigung des zu markierenden Kunststoffes vermieden. Die vielfältigen Materialkombinationen erlauben eine individuelle Anpassung der Eigenschaften der erfindungsgemäßen Pigmente an das jeweilige Applikationssystem und die zur Markierung einzusetzende Strahlung. Die Lasermarkierung von Kunststoffgegenständen bzw. Formkörpern, die die erfindungsgemäßen Pigmente enthalten, ist somit möglich. Gegenstand der Erfindung ist somit auch die Verwendung der erfindungsgemäßen lasermarkierbaren Pigmente zur Einarbeitung in schwer lasermarkierbare Polymere, sowie Kunststoffe enthaltend die erfindungsgemäßen lasermarkierbaren Pigmente.

Die nachfolgenden Beispiele sollen die Erfindung näher erläutern, ohne sie jedoch zu begrenzen.

### Beispiele

### Beispiel 1:

50 g Polystyrolpulvergranulat werden in 1250 ml Aceton erhitzt und eine Stunde unter Rückfluß gekocht. Das noch nicht gelöste Polystyrol wird durch Filtration entfernt. Zu dem Filtrat werden 50 g Iriodin® 110 gegeben und eine Stunde bei 40°C gerührt. Anschließend wird das Lösemittel bei 55°C bis auf eine Gesamtmenge von 250 ml abdestilliert und zurückgewonnen. Dann werden 250 ml Wasser zugegeben und das Aceton weiter abdestilliert bis kein Destillat mehr entsteht. Die Suspension wird abgesaugt und mit 500 ml Wasser gewaschen. Die Trocknung des Filterkuchens erfolgt bei 110°C über einen Zeitraum von 15 Stunden. Das Pulver wird dann in einem 100 µm Sieb desagglomeriert.
200 g Polypropylengranulat werden mit 0.4 g DOP gemischt, dann 1 g des oben beschriebenen Pigmentes zugegeben und ebenfalls gemischt. Die Mischung wird dann in einem Schneckenextruder aufgeheizt und Plättchen hergestellt. Die Kunststoffplättchen werden mit einem Nd:YAG-Laser (Wellenlänge 1064 nm) beschriftet.
Das Ergebnis ist eine tiefschwarze Markierung und eine relativ glatte Kunststoffoberfläche.

### Beispiel 2:

50 g Polystyrolpulvergranulat werden in 1250 ml Aceton erhitzt und eine Stunde unter Rückfluß gekocht. Das noch nicht gelöste Polystyrol wird durch Filtration entfernt. Zu dem Filtrat werden 50 g Iriodin® 110 gegeben und eine Stunde bei 40°C gerührt. Anschließend wird das Lösemittel bei 55°C bis auf eine Gesamtmenge von 250 ml abdestilliert und zurückgewonnen. Dann werden 250 ml Wasser zugegeben und das Aceton weiter abdestilliert bis kein Destillat mehr entsteht. Die Suspension wird abgesaugt und mit 500 ml Wasser gewaschen. Die Trocknung des Filterkuchens erfolgt bei 110°C über einen Zeitraum von 15 Stunden. Das Pulver wird dann in einem 100 µm Sieb desagglomeriert. Zur Beschichtung mit SiO₂ wird das Pulver in 1000 ml Wasser resuspendiert, auf 75°C erhitzt und der pH-Wert der Suspension auf 9.0 durch Zugabe von Natronlauge (16%) eingestellt. Unter Rühren wird in die Suspension Natronwasserglaslösung (8.2 Gew.-% bezogen auf SiO₂) zugetropft und der pH-Wert durch Zugabe von 14.4%-ige HCl-Lösung konstant gehalten. Nach Zugabe von 50 ml Natronwasserglaslösung wird noch 30 min. nachgerührt, die Suspension abgesaugt, mit 1000 ml Wasser nachgewaschen und bei 110°C 15 Stunden getrocknet.
200 g Polypropylengranulat werden mit 0.4 g DOP gemischt, dann 1 g des oben beschriebenen Pigmentes zugegeben und ebenfalls gemischt. Die Mischung wird dann in einem Schneckenextruder aufgeheizt und Plättchen hergestellt. Die Kunststoffplättchen werden mit einem Nd:YAG-Laser (Wellenlänge 1064 nm) beschriftet.

Das Ergebnis ist eine tiefschwarze Markierung und eine relativ glatte Kunststoffoberfläche.

## Patentansprüche

1. Lasermarkierbare Pigmente, **dadurch gekennzeichnet, dass** sie aus einem Absorber bestehen, der mit einem Markierer beschichtet ist.

2. Lasermarkierbare Pigmente nach Anspruch 1, **dadurch gekennzeichnet, dass** die lasermarkierbaren Pigmente zusätzlich mit einer Diffusionssperre beschichtet sind.

3. Lasermarkierbare Pigmente nach Anspruch 1 oder 2, **dadurch gekennzeichnet, dass** der Absorber ein anorganisches Pigment oder ein Füllstoff ist.

4. Lasermarkierbare Pigmente nach Anspruch 3, **dadurch gekennzeichnet, dass** das anorganische Pigment TiO₂, ein leitfähiges Pigment und/oder ein Effektpigment ist.

5. Lasermarkierbare Pigmente nach Anspruch 3, **dadurch gekennzeichnet, dass** der Füllstoff SiO₂ und/oder Schichtsilikate sind.

6. Lasermarkierbare Pigmente nach Anspruch 1 oder 2, **dadurch gekennzeichnet, dass** der Markierer ein intrinsisch lasermarkierbares Polymer ist.

7. Lasermarkierbare Pigmente nach Anspruch 6, **dadurch gekennzeichnet, dass** das intrinsisch lasermarkierbare Polymer Polyethylenterephthalat, Acrylnitril-Butadien-Styrol, Polystyrol, Polyphenylether, Liquid Crystal Polymers oder Polyphenylensulfid ist.

8. Lasermarkierbare Pigmente nach Anspruch 1 oder 2, **dadurch gekennzeichnet, dass** die Diffusionssperre ein Flammschutzmittel und/oder Sperrschichtbildner ist.

9. Lasermarkierbare Pigmente nach Anspruch 8, **dadurch gekennzeichnet, dass** die Diffusionssperre Ammoniumphosphat, Aluminiumoxidhydrat, Zinkborat, Antimonoxid, Wasserglas, oder Ammoniumpolyphosphat ist.

10. Verfahren zur Herstellung von lasermarkierbaren Pigmenten nach einem der Ansprüche 1 bis 9, **dadurch gekennzeichnet, dass** der Absorber mit dem Markierer beschichtet wird.

11. Verfahren nach Anspruch 10, **dadurch gekennzeichnet, dass** der mit dem Markierer beschichtete Absorber zusätzlich mit einer Diffusionssperre beschichtet wird.

12. Verwendung der lasermarkierbaren Pigmente nach einem der Ansprüche 1 bis 9 als Material zur Einarbeitung in schwer lasermarkierbare Kunststoffe.

13. Kunststoffe und daraus hergestellte Formkörper enthaltend lasermarkierbare Pigmente nach einem der Ansprüche 1 bis 9.

14. Kunststoffe und daraus hergestellte Formkörper nach Anspruch 13, **dadurch gekennzeichnet, dass** der Anteil an lasermarkierbaren Pigmenten 0.5 bis 10 Gew.-%, bezogen auf das Kunststoffsystem, beträgt.
